# EUROPEAN PATENT APPLICATION

(11) **EP 4 679 290 A1**
(43) Date of publication of application: **14.01.2026**
(21) Application number: 25180223.7
(22) Date of filing: 02.06.2025
(51) Int. Cl.: G06F 16/901, G06F 16/9032, G06F 16/93, G06F 16/957

(54) **ADVANCED SEMANTIC CACHING WITH CDN FOR RAG-BASED LLM APPLICATIONS**

(30) Priority: 12.07.2024 US 202418772080
(71) Applicant: Microsoft Technology Licensing, LLC, Redmond, WA 98052 (US)
(72) Inventor: UTHAMAN, Karthik, Redmond, Washington, 98052 (US); CHAWLA, Varun, Redmond, Washington, 98052 (US)
(74) Representative: CMS Cameron McKenna Nabarro Olswang LLP

(57) **Abstract**

A Content Distribution Network (CDN) may implemented as a front door to a RAG-based LLM for the purpose of semantically caching LLM responses to natural language prompts. More specifically, the CDN may also cache document citation(s) and/or user tag(s) along with the LLM response for purposes of ensuring that access permission constraints of the RAG are observed when providing cached LLM response as direct responses to semantically similar natural language prompts. Additionally, the CDN may be configured to modify and/or purge cached data from the CDN's cached memory database based on instructions received from a data access control (DAC) entity of the organization or enterprise client. This may ensure that the CDN observes any changes to the access permission constraints that might be made by the DAC entity.

## Description

### BACKGROUND

Large language models (LLMs) have shown remarkable performance on a variety of natural language processing tasks, such as text summarization, question answering, and natural language generation. However, LLMs are often limited by the amount of information that they can encode in their fixed-size input and output representations, as well as by the quality and diversity of the data that they are trained on. One strategy for mitigating these limitations is Retrieval Augmented Generation (RAG), which is a pre-processing technique that augments a natural language prompt received from a user based on a semantic search of external knowledge source(s), e.g., Wikipedia. The resulting augmented prompt (referred to herein as an "LLM prompt") is then passed from the RAG to the LLM, which generates an LLM response to the natural language prompt.

### SUMMARY

Some examples provide a method of semantic caching in a content delivery network (CDN) for a RAG-based LLM. The method includes receiving a natural language prompt associated with a session or user identifier (ID) and matching the natural language prompt with a cached LLM response to a semantically similar prompt. The cached LLM response was previously generated by the RAG-based LLM. The method further includes determining whether the session or user ID has access permission to document(s) used by the RAG-based LLM to generate the cached LLM response and sending the cached LLM response in response to the natural language prompt upon determining that the session or user ID has access permission to the document(s) used to generate the cached LLM response.

Other examples provide a computer storage medium having computer-executable instructions that, upon execution by a processor of a CDN, cause the processor to perform a series of steps. The steps include receiving a natural language prompt associated with a session or user identifier (ID) and matching the natural language prompt with a cached LLM response to a semantically similar prompt. The cached LLM response was previously generated by the RAG-based LLM. The steps further include determining whether the session or user ID has access permission to document(s) used by the RAG-based LLM to generate the cached LLM response and sending the cached LLM response in response to the natural language prompt upon determining that the session or user ID has access permission to the document(s) used to generate the cached LLM response.

Other examples include a database management system comprising at least one processor and at least one memory comprising computer-readable instructions configured to cause the at least one processor to perform a series of steps. The steps include receiving a natural language prompt associated with a session or user identifier (ID) and matching the natural language prompt with a cached LLM response to a semantically similar prompt. The cached LLM response was previously generated by the RAG-based LLM. The steps further include determining whether the session or user ID has access permission to document(s) used by the RAG-based LLM to generate the cached LLM response and sending the cached LLM response in response to the natural language prompt upon determining that the session or user ID has access permission to the document(s) used to generate the cached LLM response.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

FIG. 1 is a diagram illustrating a RAG-based LLM system providing generative AI services;
FIGS. 2A-2D are diagrams illustrating a CDN providing semantic caching for a RAG-based LLM;
FIG. 3 is a flowchart illustrating a method for semantic caching;
FIG. 4 is a diagram illustrating the latency performance of semantically similar prompts;
FIG. 5 is a diagram of an Azure Front Door (AFD) implementation of CDN-based front door semantic caching for generative AI;
FIG. 6 is a functional block diagram of a computing apparatus.

Corresponding reference characters indicate corresponding parts throughout the drawings. Any of the figures may be combined into a single example or embodiment.

### DETAILED DESCRIPTION

A more detailed understanding can be obtained from the following description, presented by way of example, in conjunction with the accompanying drawings. The entities, connections, arrangements, and the like that are depicted in, and in connection with the various figures, are presented by way of example and not by way of limitation. As such, any and all statements or other indications as to what a particular figure depicts, what a particular element or entity in a particular figure is or has, and any and all similar statements, that can in isolation and out of context be read as absolute and therefore limiting, can only properly be read as being constructively preceded by a clause such as "In at least some examples, ..." For brevity and clarity of presentation, this implied leading clause is not repeated *ad nauseum.*

A RAG may be combined with an LLM to form, what is referred to herein, as a "RAG based (RAG-based) LLM." One advantage of RAG-based LLMs is that the RAG adds context to the prompt that is input into the LLM by semantically searching external document(s) that are separate and distinct from the LLM's training dataset. This has been shown to significantly improve the efficacy of the LLM for several reasons. One reason is that the LLM prompt is shorter (more concise) than the natural language prompt due to the fact that the RAG removes unnecessary words (e.g., "a," "the," etc.) from the natural language prompt to generate the LLM prompt. As an example, testing has shown that shorting the natural language prompt -- "What are the ingredients of a cake?" - to the LLM prompt -- "ingredients of cake") can reduce the LLM's processing of the initial prompt from 4.01 seconds to 0.32 seconds, which is a performance improvement of approximately one order of magnitude. Another reason is that the RAG references external document(s) that are updated independently from, and more regularly than, the training data-set. Also, the external document(s) are often domain-specific to the LLM's underlying application. For instance, an LLM designed for finance may utilize a RAG that references past and present issues of the Wall Street Journal, while an LLM designed for law may utilize a RAG that references Westlaw's research library.

One consideration in implementing a RAG-based LLM is that the RAG may generally be required to observe varying levels of access permissions when referencing external documents. More specifically, the RAG's external knowledge database may include both publicly available documents and private documents (e.g., internal documents of an enterprise client), and different users/applications may be assigned different access permissions with respect to those document(s) by the enterprise client's data access control (DAC) system. As an example, C-suite executives may have access to financial reports that are not disseminated to non-executives. Moreover, these underlying access permissions may change dynamically based on decisions and policies implemented by the DAC system. Thus, RAGs may be required to semantically search their external knowledge databases subject to access permission constraints of the DAC system, as well as be capable of updating their external knowledge database based on dynamic and/or semi-static instructions received from the DAC system.

Another consideration in implementing RAG-based LLMs is artificial intelligence (AI) cost optimization, which generally refers to strategies aimed at reducing the computational resources required to operate generative AI models. Each time a natural language prompt is processed, the RAG-based LLM consumes computational resources both to semantically search the RAG's external knowledge database as well as to process the resulting LLM prompt and generate the LLM response to the natural language prompt. One strategy for AI cost optimization is to establish a cache-based content distribution network (CDN) as a front-door to the RAG-based LLM. More specifically, it has been observed that a high proportion of natural language prompts to a given LLM are semantically similar in the sense that they use slight variations in wording to ask what is essentially the same question. This may be particularly true of domain-specific LLMs designed for specific areas of expertise, such as law, biology, medicine, finance, and other specialized fields. The front-door CDN based approach exploits this semantic similarity to reduce the number of natural language prompts that are processed by the RAG-based LLM. More specifically, the CDN caches an LLM response generated by the RAG-based LLM in response to an initial natural language prompt, and thereafter provides the cached LLM response as a direct response to a subsequent natural language prompt that is deemed semantically similar to the initial natural language prompt without passing the subsequent natural language prompt to the RAG-based LLM. Testing has shown that the CDN's cache hit rate ranges between sixteen and sixty percent for various RAG-based LLMs, while delivering accurate LLM response at rates approaching 99 percent. As such, CDN-based front door applications have the potential to significantly increase the performance of RAG-based LLMs by reducing server loads as well as by reducing LLM response latency. Despite these potential performance advantages, implementation of the CDN-based front door application has technical challenges. One such challenge is how to ensure that the CDN-based front door observes the access permission constraints of the RAG-based LLM. For instance, the initial and subsequent natural language prompts may be received from user(s) having different access permissions, and thus the CDN's providing the LLM response in response to the subsequent natural language prompt may violate the access permission constraints of the RAG-based LLM. From a practical standpoint, this problem must be addressed in order for CDN-based front doors to be commercially feasible as enterprise clients will not adopt AI cost optimization solutions that violate their DAC policies.

Aspects of this disclosure address the aforementioned-problem by caching document citation(s) and/or user tag(s) along with the LLM response at the CDN front door. The document citation(s) identify which document(s) were referenced by the RAG's semantic search of the initial natural language prompt during generation of the cached LLM response by the RAG-based LLM. The user tag(s) may define which session or user IDs have access permission to the document(s) used to generate the cached LLM response. This information may allow the CDN to verify whether a session or user ID, associated with a subsequent natural language prompt, has access permission to the document(s) used to generate the cached LLM response. If so, the CDN may provide the cached LLM response as a direct response to the subsequent natural language prompt without forwarding the subsequent natural language prompt to the RAG-based LLM. Otherwise, if the CDN determines that the session or user ID associated with the subsequent natural language prompt does not have access permission to the document(s) used to generate the cached LLM response, then the CDN may forward the subsequent natural language prompt to the RAG-based LLM without sending the cached LLM response in response to the subsequent natural language prompt. This may ensure that the CDN observes access permission constraints of the RAG-based LLM. Additionally, the CDN may be configured to modify and/or purge cached data from the CDN's cached memory database based on instructions received from the data access control (DAC) entity. This may ensure that the CDN observes any changes to the access permission constraints that are made by the DAC entity.

As used herein, the term "initial natural language prompt" refers to a natural language prompt that is processed by a RAG-based LLM to generate a LLM response. The term "cached LLM response" refers to an LLM response that is cached by a CDN after being generated by a RAG-based LLM in response to an initial natural language prompt. The term "subsequent natural language prompt" refers to a natural language prompt that the CDN matches with a cached LLM response. In general, this may occur when the CDN deems the subsequent natural language prompt to be equivalent to, sufficiently similar to, a semantically similar prompt associated with the cached LLM response in the CDN caching database. It should be appreciated that the semantically similar prompt may be derived from the initial language prompt. It should be appreciated that aspects of this disclosure may be applicable to multimodal models, and that the terms "LLM" and "multimodal model" are used interchangeably herein.

As used herein, the term "document" refers to a chunk of external data that is stored in the RAG external knowledge DB. Document(s) are generally referenced by the RAG when performing a semantic search based on a natural language prompt. It should be appreciated that a single file (e.g., a financial report from a CFO, a technical report from an Engineer, etc.) may be comprised of multiple "document(s)" (i.e., multiple chunks of data) in the RAG's external knowledge database. It should further be appreciated that some document(s) may be globally accessible by all users/applications, while other document(s) may be accessible only to users/applications affiliated with a certain organization, and that yet other document(s) may be accessible only to certain users/applications within certain organization(s).

Access of a given user/application to a given document may be defined based on access permissions associated with a session or user ID assigned to the given user/application. As used herein, the term "user ID" refers to an identifier that uniquely identifies a particular user, a particular application, or a homogenous group of users/applications having a common level of access permission with respect to document(s) referenced by the RAG-based LLM. For instance, user IDs may include usernames and object IDs. (e.g., Azure active directory (AAD) object IDs, etc.), as well as identifiers of specific device (e.g., IP address, JA3/JA4 fingerprints/hashes, etc.). The term "session ID" refers to an identifier that uniquely identifies a particular organization or a particular enterprise client that is affiliated with a pool of users/applications, which may have varying levels of access permissions with respect to document(s) referenced by the RAG-based LLM. For instance, session IDs may include an ID assigned to an endpoint of an enterprise client. As an example, session IDs may identify different enterprise clients and/or different organizations (e.g., business units) within the same enterprise client. It should be appreciated that a given user/application may be assigned multiple session IDs and/or multiple user IDs. As an example, one set of user IDs may be assigned to individual employees, while another set of user IDs may be assigned to certain classes of employees (e.g., executives, managers, etc.). Likewise, one set of session IDs may be assigned to different enterprise clients, while another set of session IDs may be assigned to different organizations within the same enterprise client. In this way, a given user/application may be assigned multiple session IDs (e.g., a session ID reflecting the user/application's affiliation with a particular enterprise client, a session ID reflecting the user/application's affiliation with a particular organization within an enterprise client, etc.) as well as multiple user IDs (a personal user ID, a group user ID, etc.). It should be appreciated that a "user tag" may be composed of all or a subset of the user/session IDs associated with an initial natural language prompt. In some examples, a user tag may include a hash of all or a subset of the user/session IDs

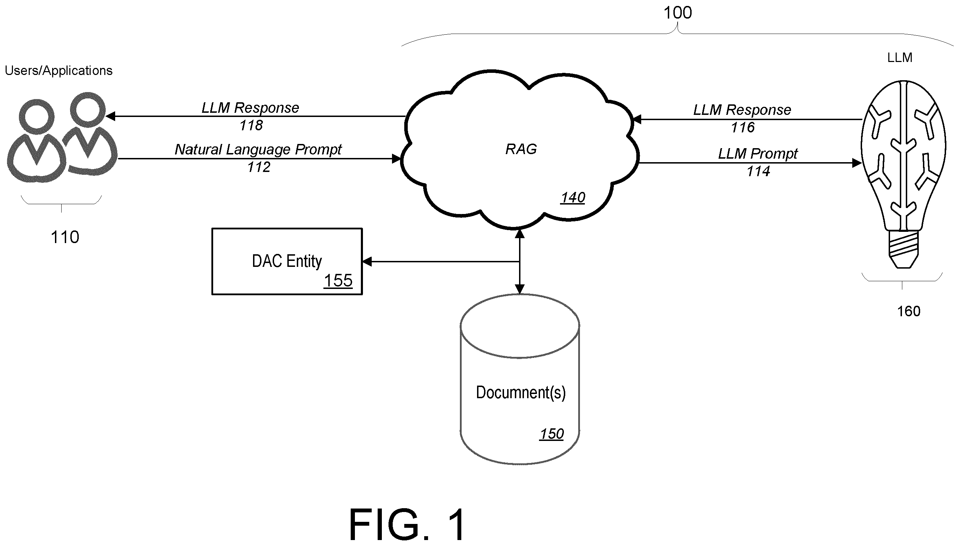

FIG. 1 is a diagram illustrating how a RAG-based LLM 100 provides generative AI services to users/applications 101. As shown, the RAG-based LLM 100 includes a RAG 140 and an LLM 160. The RAG 140 augments a natural language prompt 112 received from a corresponding one of the users/applications 110 by semantically searching document(s) 150 to retrieve context related to the natural language prompt 112. In doing so, the RAG 140 generates an LLM prompt 114 which includes a semantically similar prompt to the natural language prompt 112, as well as the context retrieved from the document(s) 150. The LLM prompt 114 is then sent to the LLM 160, which processes the LLM prompt 114 to generate an LLM response 116. The LLM response 116 is then returned to the RAG 140, which adds citations identifying which of the document(s) 150 were referenced to retrieve the context included in the LLM prompt 114. The RAG 140 then forwards the LLM response 118 (which includes the citations) as a response to the natural language prompt 112. It should be appreciated that the RAG 140 may perform the semantic search of the document(s) 150 subject to access permission constraints provided by the DAC entity 155. The access permission constraints may define session and user IDs that have access permission to each of the document(s) 150. The RAG 140 may use session or user ID(s) included in the natural language prompt 112 to determine which of the document(s) 150 may be referenced during the semantic search. It should be further appreciated that the DAC entity 155 may update the access permission constraints of the RAG 140 dynamically or semi-statically by sending instructions to the RAG 140.

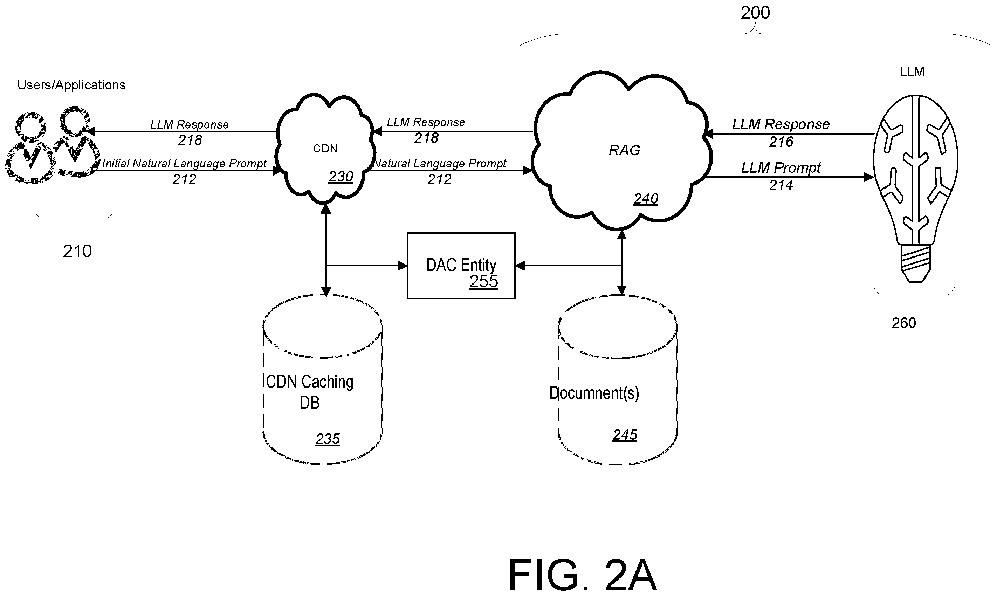

FIGS. 2A-2D are diagrams illustrating how a CDN 230 provides semantic caching for a RAG-based LLM 200. In FIG. 2A, the CDN 230 parses an initial natural language prompt 212 received from a corresponding one of the users/applications 110 prior to forwarding the initial natural language prompt 212 to the RAG 140. In doing so, the CDN 230 may identify session or user IDs associated with the initial natural language prompt 212, as well as derive a semantically similar prompt from the initial natural language prompt 212. The initial natural language prompt 212 may then be processed by the RAG-based LLM 200 in a manner similar to that described above with respect to the RAG-based LLM 100. For example, the RAG 240 may generate an LLM prompt 214 based on a semantic search of the document(s) 245, the LLM 260 may generate an LLM response 216 from the LLM prompt 214, and the RAG 240 may then add citations and provide the resulting LLM response 218. Prior to forwarding the LLM response 218 to the corresponding one of the users/applications 210, the CDN 230 may parse the LLM response 218 to identify the citations provided by the RAG 240. The CDN may then cache the LLM response 218 in the CDN caching DB 235, along with the session or user IDs and the semantically similar prompt extracted from the initial natural language prompt 212 and the citations extracted from the LLM response 218. In some embodiments, the CDN 230 may cache the session or user IDs, the citations, and/or the semantically similar prompt as user tags and/or document tags in the CDN caching DB 235. In some examples, the CDN caching DB includes a vector database and a CDN database. In such examples, the vector database may store cache key(s) that cross-reference cached LLM responses stored in the CDN database. The cache key(s) may be generated by hashing, or otherwise calculating a vector from, user/session ID(s) and natural language prompts associated with the cached LLM responses stored om the CDN database. Together, the vector and CDN databases may allow the CDN 230 to semantically search for cached LLM responses subject to access permission constraints/policies provided by the DAC entity 255.

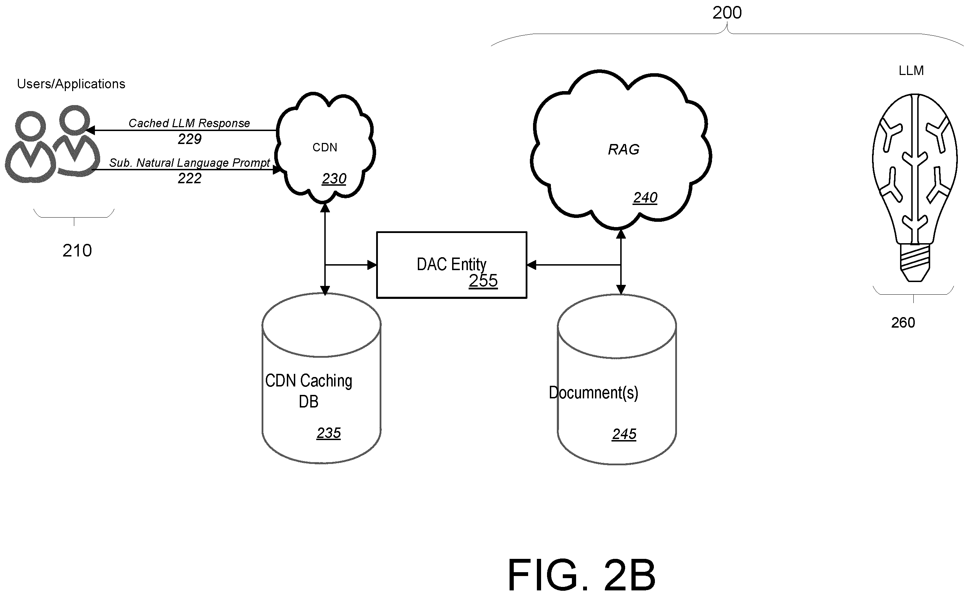

In FIG. 2B, the CDN 230 parses a subsequent natural language prompt 222 received from a corresponding one of the users/applications 210. It should be appreciated that the subsequent natural language prompt 222 may be received from the same or different user/application that provided the initial natural language prompt 212. In parsing the subsequent natural language prompt 222, the CDN 230 extracts session or user ID(s) associated with the subsequent natural language prompt 222, and matches the subsequent natural language prompt 222 with the cached LLM response 229. The CDN 230 then determines that the session or user ID(s) associated with the subsequent natural language prompt 222 have access permission to the document(s) used to generate the cached LLM response 229, and provides the cached LLM response 229 as a direct response to the subsequent natural language prompt 222. This is done without forwarding the subsequent natural language prompt 222 to the RAG-based LLM 200.

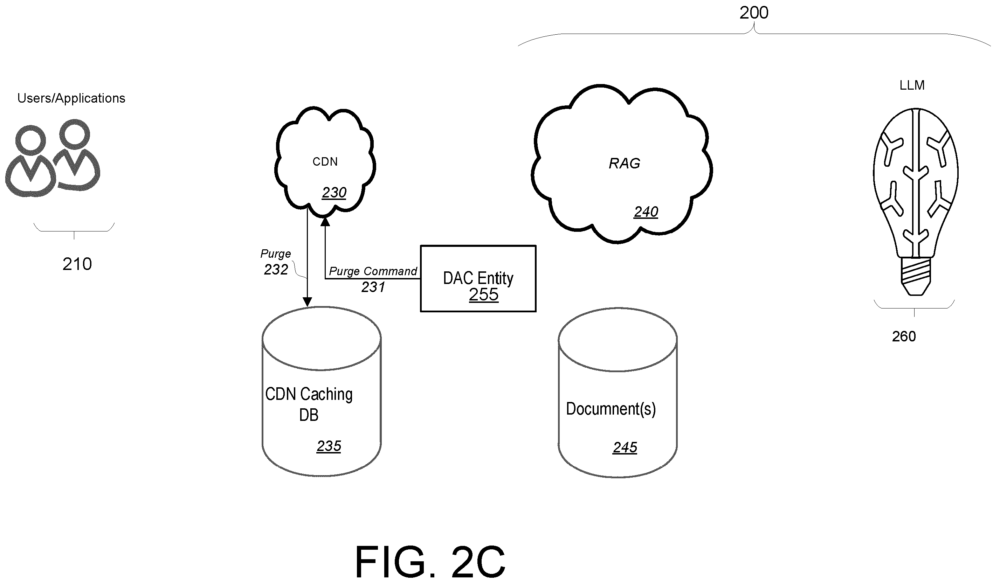

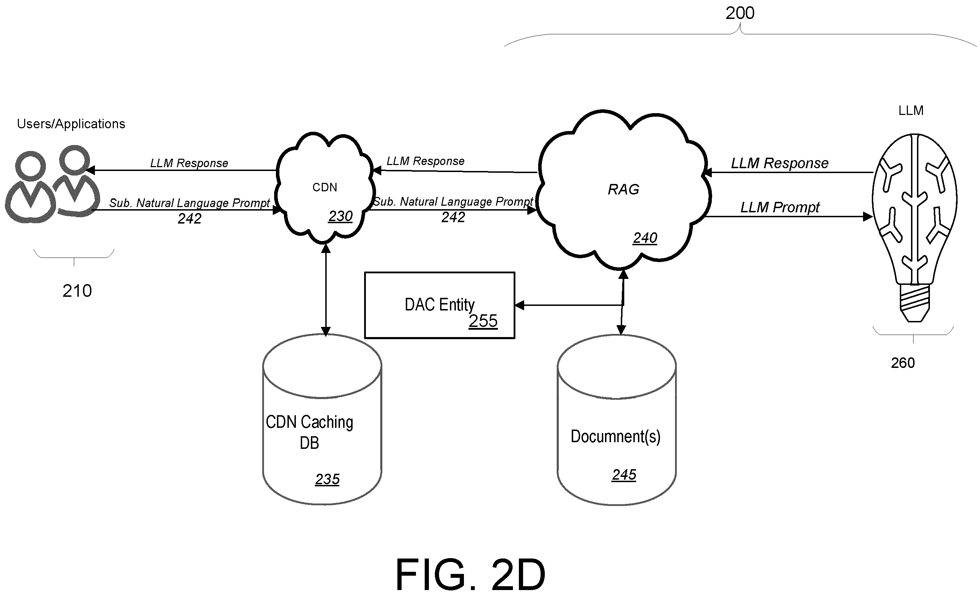

In FIG. 2C, the CDN 230 receives a purge command 231 from the DAC entity 255, which instructs the CDN 230 to purge 232 the cached LLM response 229 from the CDN caching DB 235. The purge command 231 may specify a session or user ID associated with the cached LLM response 229 or a document ID associated with the cached LLM response 229. This allows the CDN 230 to identify the cached LLM response 229 that is to be purged 232 from the CDN caching DB 235. It should be appreciated that the CDN 230 may use the session or user ID, or the document ID, to identify the cached LLM response 229 based on a user tag or document tag associated with the cached LLM response 229 in the CDN caching DB 235. In FIG. 2D, the CDN 230 receives a subsequent natural language prompt 242, which is effectively equivalent to the subsequent natural language prompt 222 in FIG. 2A. However, unlike the subsequent natural language prompt 222, the subsequent natural language prompt 242 is received after the cached LLM response 229 has been purged from the CDN caching DB 235. As such, the subsequent natural language prompt 242 is forwarded to the RAG-based LLM 200 for standard processing. It should be appreciated that a similar scenario would occur when the subsequent natural language prompt 242 been received prior to the purging of the cached LLM response 229, and the CDN 230 determined that the session or user ID associated with the subsequent natural language prompt 242 lacked access permission to the document(s) used to generate the cached LLM response 229.

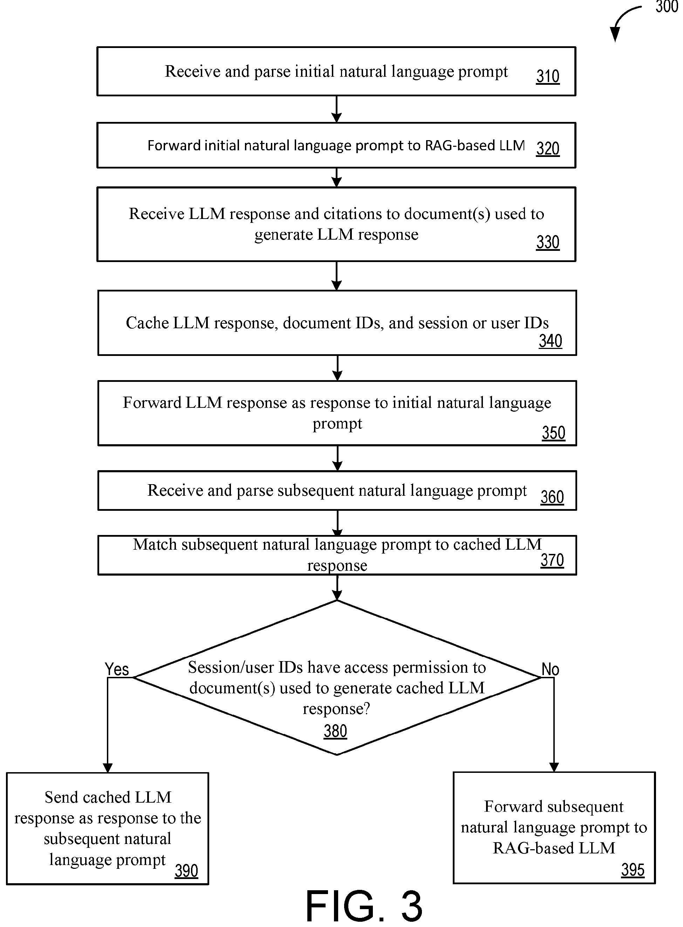

FIG. 3 is a flowchart illustrating a method 300 for semantic caching, as may be performed by a CDN. As shown, the method 300 begins with step 310, where the CDN receives and parses an initial natural language prompt. At step 320, the CDN forwards the initial natural language prompt to the RAG-based LLM. At step 330, the CDN receives and parses an LLM response to identify citations to document(s) used to generate the LLM response.

At step 340, the CDN caches the LLM response, document IDs, the session or user IDs, and a semantically similar prompt derived from the initial natural language prompt. It should be appreciated that the CDN may cache the document IDs, session or user IDs, and/or the semantically similar prompt in the form of document tags and/or user tags associated with the cached LLM response. At step 350, the CDN forwards the LLM response as response to the initial natural language prompt.

At step 360, the CDN receives a subsequent natural language prompt and parses the subsequent natural language prompt to identify session or user ID(s) associated with the subsequent natural language prompt.

At step 370, the CDN matches the subsequent natural language prompt to the cached LLM response. This matching may be achieved by determining that the subsequent natural language prompt is semantically similar to a cached prompt associated with the cached LLM response.

At step 380, the CDN determines whether session or user ID(s) associated with the subsequent natural language prompt have access permission to the document(s) used to generate cached LLM response. If so, the CDN sends the cached LLM response as a response to the subsequent natural language prompt at step 390. Otherwise, if the CDN determines that the session or user ID(s) associated with the subsequent natural language prompt do not have access permission to the document(s) used to generate cached LLM response, then the CDN forwards the subsequent natural language prompt to the RAG-based LLM for generative AI processing.

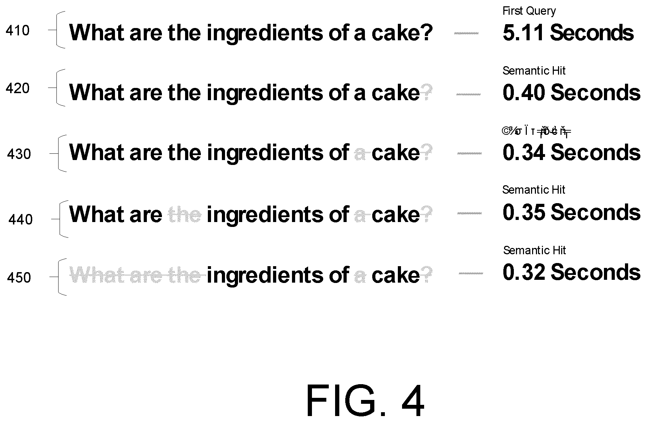

FIG. 4 is a diagram illustrating the latency performance of various semantically similar prompts which include a natural language prompt 410 and semantic prompts 420-450 derived from the natural language prompt 410. As shown, the latency performance of the semantic prompts 420-450 correlates with the degree of semantic compression/reduction such that the semantic prompts 420-450 generally exhibit lower latency as they become shorter/more-concise.

The following describes a non-limiting example of how an LLM generates an LLM response based on an LLM unput. The process begins when a customer provides a natural language prompt or query. This prompt serves as the input to the LLM. The prompt can be a question, a command, or any other form of text that conveys the user's intent. The LLM tokenizes the input prompt into smaller units called tokens. These tokens can be words, subwords, or characters. Preprocessing steps may include lowercasing, removing special characters, and handling out-of-vocabulary tokens. The LLM processes the tokenized prompt through its layers (such as transformer layers in models like GPT or BERT). At each layer, contextual embeddings are generated for each token. These embeddings capture the meaning and context of the input. The final layer's embeddings represent the entire prompt and are used for downstream tasks. Once the embeddings are generated, the LLM performs inference. This involves predicting the next token(s) based on the context. For autoregressive models (like GPT), the LLM generates tokens one by one, conditioning on the previous tokens. The LLM predicts the most likely token(s) using its learned probabilities. The generated tokens form the LLM's response, which can be a continuation of the prompt or an answer to the query. The generated response may contain special tokens (e.g., [CLS], [SEP]) that need to be removed. Post-processing ensures the output is coherent, grammatical, and relevant. The final response is presented to the user. This example should not be construed as limiting the scope of this disclosure or the claims.

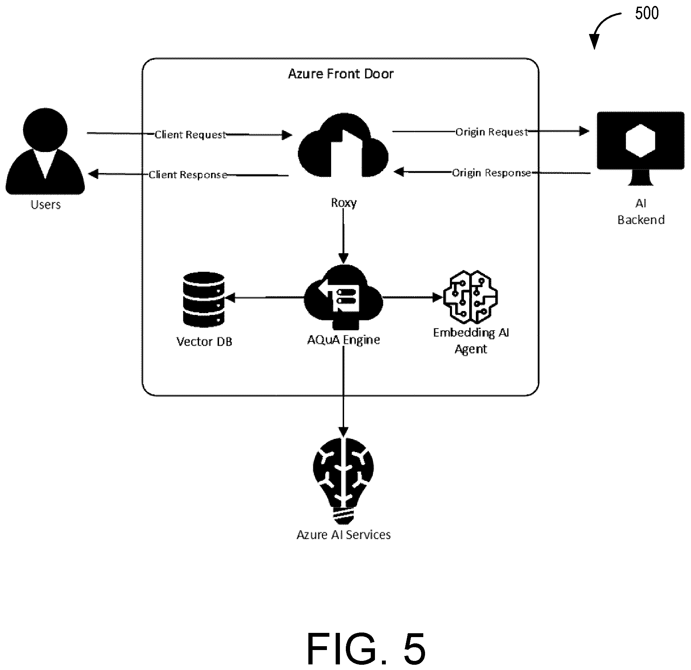

FIG. 5 is a diagram 500 of an Azure Front Door (AFD) implementation of a CDN front door for generative AI. As shown, Roxy may refer to AFD's proxy implementation. The AQuA engine may refer to the engine which implements semantic caching by analyzing the customer prompts, including searching the vector DB portion of the CDN caching DB. The AQuA engine may rely on vector embedding representations of the customer prompts, which may be generated by the Embedding AI Agent. Azure AI services may refer to the suite of AI services offered by a given network or network provider, including content safety services that can perform content moderation and jailbreak detection.

The CDN-based techniques described herein may be implemented in Azure Front Door (AFD), which is a Microsoft product. The CDN may parse LLM responses to extract RAG citations. The CDN may cache the LLM response using a cache key derived from a vector embedding representation of the initial natural language prompt. This may capture the semantic relationship for future requests by positioning similar items closer in the vector space. The CDN may also cache the user ID and document ID from the citation. The CDN may base its semantic similarity determination on a similarity threshold that is configurable by the enterprise customer. The CDN may provide cached LLM responses for semantically similar requests from the same user, and also handle changes in authorization to the external documents by enabling the system handling the authorization changes to purge the cached content based on the user and document tags. This approach can allow semantic caching even when personalized data is used by ensuring that the cached content with personalized data is only valid if the external sources used by RAG to generate the response are still accessible by the user.

Context retrieved by a RAG can provide additional information, evidence, or diversity to the LLM prompts and/or LLM responses, and can also be used to generate citations for the source of the external knowledge. RAG has been shown to improve the quality and informativeness of the LLM outputs on various NLG tasks, such as open-domain question answering, fact verification, and dialogue generation. However, RAG also introduces new challenges in terms of latency and computational cost, as it requires performing retrieval and generation for each request, which can be expensive and time-consuming, especially for large-scale LLMs and knowledge bases. Moreover, RAG can also raise privacy and security issues, as it may use external documents that contain sensitive or personalized data, such as user profiles, preferences, or history, to augment the input prompt. In such cases, the LLM output may also contain sensitive or personalized information, which may not be appropriate to cache or share with other users. Therefore, there is a need to develop efficient and secure methods to enable RAG with LLM-powered applications at scale. Aspects of this disclosure use advanced semantic caching to improve the efficiency and scalability of RAG-based LLMs. This concept may exploit the fact that many natural language prompts are semantically similar or redundant, and can be answered with the same or similar LLM responses. For example, the questions "Who is the president of the United States?" and "What is the name of the US president?" may be considered semantically equivalent and answered with the same response, such as "Joe Biden". Similarly, the questions "What is the capital of France?" and "Which city is the seat of the French government?" are semantically related, and can be answered with a similar response, such as "Paris". By caching LLM outputs for semantically similar requests, it is possible to reduce the number of retrieval and generation calls, and improve the response time and throughput of the LLM-powered applications.

It should be appreciated that semantic caching for RAG-based LLMs is not trivial and may require consideration of the following features: (1) the natural language prompt; (2) session or user ID; (3) external context corresponding to the document that is retrieved and used to augment the natural language prompt; and (4) the citation referencing the source of the external context. These aspects can affect the semantic similarity of the requests and the responses, and also the authorization and validity of the external documents. A CDN-based service like AFD can parse the incoming request to extract the customer prompt and the user identification, and parse the response to extract the citation for the external context. The CDN can then cache the response based on the semantic similarity of the prompt and the user identity, and include the original document ID in the citation. The CDN-based front door approach may offer the following benefits when implemented in a RAG-based LLM: Improved scalability and reliability of RAG-based applications by reducing the dependency on external knowledge sources as well as to reduce the cost of operating the LLM (e.g., to reduce the number of prompts the LLM must process to service the same user load) ; Enhanced user experience and satisfaction by providing consistent and relevant responses; Increased security and privacy by ensuring that cached content with personalized data is only accessible by authorized users.

The following is a non-limiting example implementation of CDN caching for a RAG-based LLM. In this example, a user wants to use an LLM-powered application to generate a summary of the responsibilities of specific career roles at the company. The user provides the career role in the customer prompt, and the application uses RAG to retrieve a chunk of context from the company enterprise data (a web page that the user has access to) that is relevant to the career role & responsibilities and augment the prompt with the context before passing it to the LLM for generation. In this case, the team which the user is part of has shared a document with the team with more specific details of the career role expectations for the user's team. The RAG may retrieve the relevant chunk context from this document and use it to augment the prompt further. The LLM may then generate a summary of the article, along with a citation for the company role and responsibilities web page and the shared document that was used as the external context. The summary and the citation may be returned to the user as a response. In the above example, the following customer prompt, external context, LLM output, and citation may occur.

### Customer prompt: Summarize the responsibilities for a data scientist role.

Context from company role & responsibilities web page: Designs, develops, and programs methods, processes, and systems to consolidate and analyze unstructured, diverse "big data" sources to generate actionable insights and solutions for client services, product enhancement, and business impact. Interacts with product and service teams to identify questions and hypotheses for data analysis and experiments. Develops and codes software programs, algorithms, models, and automated processes to cleanse, integrate and evaluate large datasets from multiple disparate sources. Identifies meaningful insights from large data and metadata sources; interprets and communicates insights and findings from analysis and experiments to make recommendations to product, service, and business managers.

Context from team shared document: Develops state of the art machine learning (ML) solutions for challenging problems and generalizes them into repeatable frameworks (e.g., modules, packages, general purpose software) for others to use. Defines and enforces team standards related to bias, privacy, and ethics. Evaluates the methodology and performance of teammates' models and, as appropriate, recommends solutions for improvement. Anticipates the risks of data leakage, the bias/variance tradeoff, methodological limitations, etc., and provides expert guidance to teammates on solutions. Identifies new techniques or novel ways to leverage existing models and techniques. Partners with other senior leaders to identify and explore opportunities for the application of ML and predictive analysis. Leverages results from modeling and analyses to influence business and/or product strategy and leadership across teams and identifies new customer opportunities for driving transformative customer solutions with ML modeling. Ensures the best practices for ML modeling are followed with consideration for artificial intelligence (AI) ethics. Possesses and applies expertise in specialized areas by staying abreast of current and emerging methodologies in AI and ML across industries and other companies.

LLM output: Data scientists play a critical role in extracting actionable insights from large and diverse datasets. They design, develop, and program methods to consolidate and analyze unstructured "big data" sources. By cleansing, integrating, and evaluating these datasets, they identify meaningful insights and communicate their findings to product, service, and business managers. Additionally, data scientists contribute to state-of-the-art machine learning (ML) solutions, generalize them into reusable frameworks, and enforce ethical standards related to bias, privacy, and AI ethics. They evaluate teammates' models, explore novel techniques, and influence business strategy using modeling results and analyses

Citation: (1) Source: https://contoso.com/roles.aspx, ChunkId: cc31dd9c-fe70-401b-be8e-e761e8d7e5a3; (2) Source:
https://contoso.sharepoint.com/:w:/r/sites/DataScience/TeamRoles.docx, ChunkId: 793e4f08-c855-46ea-9f9c-016745b8014c

In this scenario, a CDN service may parse the incoming request to extract the customer prompt and the user identification (e.g., the user ID or the application ID), and parse the response to extract the citation for the external context (e.g., the company web page URL and the document URL along with the chunk identifiers). The CDN may then cache the response based on the semantic similarity of the prompt and the user identity and include the original web page and document identifiers in the citation. For example, the CDN may use a hash function to generate a cache key based on the prompt and the user identity and store the response and the citations under that key. The CDN may also use a tag function to generate tags based on the web page identifier and the document identifier and associate the tags with the cache key. In this way, the CDN may serve cached responses for semantically similar requests from the same user, and handle changes in authorization to the web page or the document by purging the cached content based on the user and citation tags. For example, if the user or the application loses access to the web page that was used as the external context, the CDN may purge the cache entries that have the tag corresponding to that page. Similarly, if the web page is updated or deleted, the CDN may purge the cache entries that have the tag corresponding to that page. The same approach works for the authorization changes to the team's shared document. This approach may help us to use semantic caching even for cases when personalized data is used in RAG by ensuring that we only cache the corresponding responses if the personalized data used to generate the LLM response is still accessible by the user. Exemplary Operating Environment

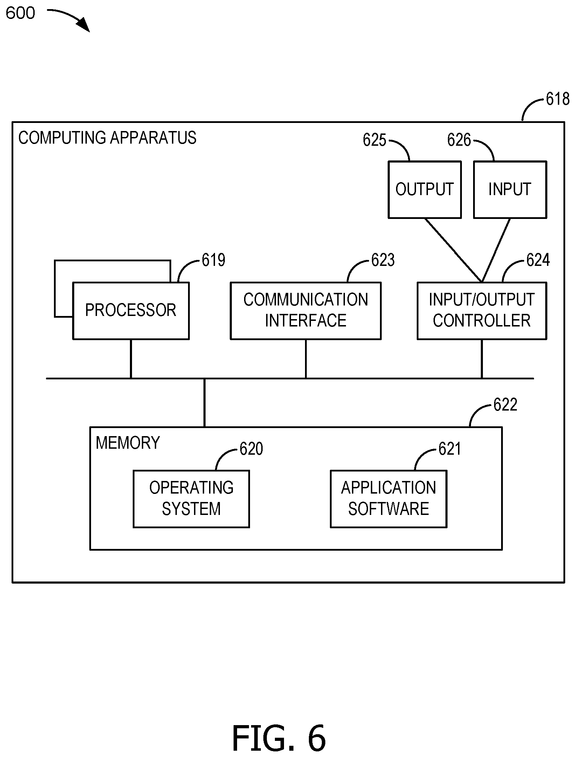

The present disclosure is operable with a computing apparatus according to an embodiment as a functional block diagram 600 in FIG. 6. In an example, components of a computing apparatus 618 are implemented as a part of an electronic device according to one or more embodiments described in this specification. The computing apparatus 618 is a computing device, such as, but not limited to, devices that are described in FIGS. 2A-2D.

The computing apparatus 618 comprises one or more processors 619 which can be microprocessors, controllers, or any other suitable type of processors for processing computer executable instructions to control the operation of the electronic device. Alternatively, or in addition, the processor 619 is any technology capable of executing logic or instructions, such as a hardcoded machine. In some examples, platform software comprising an operating system 620 or any other suitable platform software is provided on the apparatus 618 to enable application software 621 to be executed on the device.

In some examples, computer executable instructions are provided using any computer-readable medium or media accessible by the computing apparatus 618. Computer-readable media include, for example, computer storage media such as a memory 622 and communications media. Computer storage media, such as a memory 622, include volatile and non-volatile, removable, and non-removable media implemented in any method or technology for storage of information such as computer readable instructions, data structures, program modules or the like. Computer storage media include, but are not limited to, Random Access Memory (RAM), Read-Only Memory (ROM), Erasable Programmable Read-Only Memory (EPROM), Electrically Erasable Programmable Read-Only Memory (EEPROM), persistent memory, phase change memory, flash memory or other memory technology, Compact Disk Read-Only Memory (CD-ROM), digital versatile disks (DVD) or other optical storage, magnetic cassettes, magnetic tape, magnetic disk storage, shingled disk storage or other magnetic storage devices, or any other non-transmission medium that can be used to store information for access by a computing apparatus. In contrast, communication media may embody computer readable instructions, data structures, program modules, or the like in a modulated data signal, such as a carrier wave, or other transport mechanism. As defined herein, computer storage media do not include communication media. Therefore, a computer storage medium does not include a propagating signal. Propagated signals per se are not examples of computer storage media. Although the computer storage medium (the memory 622) is shown within the computing apparatus 618, it will be appreciated by a person skilled in the art, that, in some examples, the storage is distributed or located remotely and accessed via a network or other communication link (e.g., using a communication interface 623).

Further, in some examples, the computing apparatus 618 comprises an input/output controller 624 configured to output information to one or more output devices 625, for example a display or a speaker, which are separate from or integral to the electronic device. Additionally, or alternatively, the input/output controller 624 is configured to receive and process an input from one or more input devices 626, for example, a keyboard, a microphone, or a touchpad. In one example, the output device 625 also acts as the input device. An example of such a device is a touch sensitive display. The input/output controller 624 in other examples outputs data to devices other than the output device, e.g., a locally connected printing device. In some examples, a user provides input to the input device(s) 626 and/or receives output from the output devices 625.

The functionality described herein can be performed, at least in part, by one or more hardware logic components. The computing apparatus 618 is configured by the program code when executed by the processor 619 to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Program-specific Standard Products (ASSPs), System-on-a-chip systems (SOCs), Complex Programmable Logic Devices (CPLDs), Graphics Processing Units (GPUs).

At least a portion of the functionality of the various elements in the figures may be performed by other elements in the figures, or an entity (e.g., processor, web service, server, application program, computing device, etc.) not shown in the figures.

Although described in connection with an exemplary computing system environment, examples of the disclosure are capable of implementation with numerous other general purpose or special purpose computing system environments, configurations, or devices.

Examples of well-known computing systems, environments, and/or configurations that are suitable for use with aspects of the disclosure include, but are not limited to, mobile or portable computing devices (e.g., smartphones), personal computers, server computers, hand-held (e.g., tablet) or laptop devices, multiprocessor systems, gaming consoles or controllers, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, and the like. **In** general, the disclosure is operable with any device with processing capability such that it can execute instructions such as those described herein. Such systems or devices accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure include different computer-executable instructions or components having more or less functionality than illustrated and described herein.

In examples involving a general-purpose computer, aspects of the disclosure transform the general-purpose computer into a special-purpose computing device when configured to execute the instructions described herein.

Any range or device value given herein may be extended or altered without losing the effect sought, as will be apparent to the skilled person.

While no personally identifiable information is tracked by aspects of the disclosure, examples have been described with reference to data monitored and/or collected from the users. In some examples, notice may be provided to the users of the collection of the data (e.g., via a dialog box or preference setting) and users are given the opportunity to give or deny consent for the monitoring and/or collection. The consent can take the form of opt-in consent or opt-out consent.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The embodiments illustrated and described herein as well as embodiments not specifically described herein but within the scope of aspects of the claims constitute exemplary means for receiving a first search request, the first search request including one or more search terms; identifying one or more product categories as output from a machine learning classification model in response to inputting of the one or more search terms; identifying a first plurality of products that are assigned to the one or more product categories, each product of the first plurality of products including a plurality of product titles and a plurality of product short descriptions in a natural language; applying the plurality of product titles and the plurality of product short descriptions as input to a second machine learning model that is configured to generate a plurality of recommended searches, each recommended search of the plurality of recommended searches including at least one search term; scoring each recommended search of the plurality of recommended searches; selecting one or more recommended searches of the plurality of recommended searches based on the scoring; and causing the one or more recommended searches to be displayed as user-interactable components on a graphical user interface, each user-interactable component being configured to execute a second search request upon user interaction with the user-interactable component.

In examples there is a content delivery network (CDN) (230) comprising:
a processor; and
at least one memory comprising computer-executable instructions for execution by the processor, the computer-executable instructions, upon execution by the processor, causing the processor to:
   receive a natural language prompt (222) for input into a Retrieval Augmented Generation (RAG) based (RAG-based) large language model (LLM) (200), the natural language prompt (222) being associated with a session or user identifier (ID);
   match the natural language prompt (222) with a cached LLM response (229) to a semantically similar prompt, the cached LLM response (229) having been previously generated by the RAG-based LLM (200);
   determine whether the session or user ID has access permission to document(s) used by the RAG-based LLM (200) to generate the cached LLM response (229); and
   send the cached LLM response (229) in response to the natural language prompt (222) upon determining that the session or user ID has access permission to the document(s) used to generate the cached LLM response (229).

In the example of the preceding paragraph, the computer-executable instructions may further cause the processor to forward the natural language prompt to the RAG-based LLM upon determining that the session or user ID lacks access permission to the document(s) used to generate the cached LLM response.

In examples the natural language prompt is forwarded to the RAG-based LLM without sending the cached LLM response in response to the natural language prompt.

At least a portion of the functionality of the various elements in FIG. 1 to FIG. 8 can be performed by other elements in FIG. 1 to FIG. 8, or an entity (e.g., processor, web service, server, application program, computing device, etc.) not shown in FIG. 1 to FIG. 8.

In some examples, the operations described herein can be implemented as software instructions encoded on a computer-readable medium, in hardware programmed or designed to perform the operations, or both. For example, aspects of the disclosure can be implemented as a system on a chip or other circuitry including a plurality of interconnected, electrically conductive elements.

While the aspects of the disclosure have been described in terms of various examples with their associated operations, a person skilled in the art would appreciate that a combination of operations from any number of different examples is also within scope of the aspects of the disclosure.

The term "Wi-Fi" as used herein refers, in some examples, to a wireless local area network using high frequency radio signals for the transmission of data. The term "BLUETOOTH^{®}" as used herein refers, in some examples, to a wireless technology standard for exchanging data over short distances using short wavelength radio transmission. The term "NFC" as used herein refers, in some examples, to a short-range high frequency wireless communication technology for the exchange of data over short distances.

The term "comprising" is used in this specification to mean including the feature(s) or act(s) followed thereafter, without excluding the presence of one or more additional features or acts.

In some examples, the operations illustrated in the figures are implemented as software instructions encoded on a computer readable medium, in hardware programmed or designed to perform the operations, or both. For example, aspects of the disclosure are implemented as a system on a chip or other circuitry including a plurality of interconnected, electrically conductive elements.

The order of execution or performance of the operations in examples of the disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the disclosure.

When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Within the scope of this application, it is expressly intended that the various aspects, embodiments, examples, and alternatives set out in the preceding paragraphs, in the claims and/or in the description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim, accordingly, including the right to amend any originally filed claim to depend from and/or incorporate any feature of any other claim although not originally claimed in that manner.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

## Claims

1. A method of semantic caching in a content delivery network (CDN) (230) for a Retrieval Augmented Generation (RAG) based (RAG-based) large language model (LLM) (200), the method comprising:
receiving, by the CDN (230), a natural language prompt (222) associated with a session or user identifier (ID);
matching, by the CDN (230), the natural language prompt (222) with a cached LLM response (229) to a semantically similar prompt, the cached LLM response (229) having been previously generated by the RAG-based LLM (200);
determining, by the CDN (230), whether the session or user ID has access permission to document(s) used by the RAG-based LLM (200) to generate the cached LLM response (229); and
sending, by the CDN (230), the cached LLM response (229) in response to the natural language (222) prompt upon determining that the session or user ID has access permission to the document(s) used to generate the cached LLM response (229).

2. The method of claim 1, further comprising:
forwarding, by the CDN, the natural language prompt to the RAG-based LLM upon determining that the session or user ID lacks access permission to the document(s) used to generate the cached LLM response.

3. The method of claim 2, wherein the natural language prompt is forwarded to the RAG-based LLM without sending the cached LLM response in response to the natural language prompt.

4. The method of any preceding claim, wherein the cached LLM response is associated with user tag(s) in a database of the CDN, the user tag(s) defining which session or user IDs have access permission to the document(s) used to generate the cached LLM response.

5. The method of claim 4, further comprising:
receiving, by the CDN, a purge command from a data access control (DAC) entity, the purge command instructing the CDN to remove cached LLM response s associated one of the user tag(s) associated with the cached LLM response in the database of the CDN; and
purging the cached LLM response from the database of the CDN based on the purge command.

6. The method of any preceding claim, wherein the cached LLM response is associated with document tag(s) in a database of the CDN, the document tag(s) identifying the document(s) used to generate the cached LLM response.

7. The method of claim 6, further comprising:
receiving, by the CDN, a purge command from a data access control (DAC) entity, the purge command instructing the CDN to remove cached LLM response s associated with one of the document tag(s) associated with the cached LLM response in the database of the CDN; and
purging the cached LLM response from the database of the CDN based on the purge command.

8. The method of any preceding claim, wherein the cached LLM response is sent in response to the natural language prompt without forwarding the natural language prompt, or any prompt derived therefrom, to the RAG-based LLM.

9. A computer storage medium having computer-executable instructions that, upon execution by a processor of a content delivery network (CDN) (230), cause the processor to:
receive a natural language prompt (222) for input into a Retrieval Augmented Generation (RAG) based (RAG-based) large language model (LLM) (200), the natural language prompt (222) being associated with a session or user identifier (ID);
match the natural language prompt (222) with a cached LLM response (229) to a semantically similar prompt, the cached LLM response (229) having been previously generated by the RAG-based LLM (200);
determine whether the session or user ID has access permission to document(s) used by the RAG-based LLM (200) to generate the cached LLM response (229); and
send the cached LLM response (229) in response to the natural language prompt (222) upon determining that the session or user ID has access permission to the document(s) used to generate the cached LLM response (229).

10. The computer storage medium of claim 9, wherein the computer-executable instructions further cause the processor to forward the natural language prompt to the RAG-based LLM upon determining that the session or user ID lacks access permission to the document(s) used to generate the cached LLM response.

11. The computer storage medium of claim 10, wherein the natural language prompt is forwarded to the RAG-based LLM without sending the cached LLM response in response to the natural language prompt.

12. The computer storage medium of claim 9 or claim 10, wherein the cached LLM response is associated with user tag(s) in a database of the CDN, the user tag(s) defining which session or user IDs have access permission to the document(s) used to generate the cached LLM response.

13. The computer storage medium of claim 12, wherein the computer-executable instructions further cause the processor to receive a purge command from a data access control (DAC) entity, the purge command instructing the CDN to remove cached LLM response s associated one of the user tag(s) associated with the cached LLM response in the database of the CDN; and
purging the cached LLM response from the database of the CDN based on the purge command.

14. The computer storage medium of any of claims 9 to 13, wherein the cached LLM response is associated with document tag(s) in a database of the CDN, the document tag(s) identifying the document(s) used to generate the cached LLM response.

15. The computer storage medium of claim 14, wherein the computer-executable instructions further cause the processor to:
receive a purge command from a data access control (DAC) entity, the purge command instructing the CDN to remove cached LLM response s associated with one of the document tag(s) associated with the cached LLM response in the database of the CDN and
purge the cached LLM response from the database of the CDN based on the purge command.
